# EUROPÄISCHE PATENTANMELDUNG

(11) **EP 3 232 168 A1**
(43) Veröffentlichungstag der Anmeldung: **18.10.2017**
(21) Anmeldenummer: 17158025.1
(22) Anmeldetag: 27.02.2017
(51) Int. Cl.: G01F 23/284

(54) **BESTIMMUNG EINES FÜLLSTANDS EINES MEDIUMS**

(30) Priorität: 15.04.2016 DE 102016107049
(71) Anmelder: Sick AG, 79183 Waldkirch (DE)
(72) Erfinder: Prinz, Oliver, 79104 Freiburg (DE); Kronauge, Matthias, 22761 Hamburg (DE)

(57) **Zusammenfassung**

Es wird eine Anordnung mit einem Behälter (12) und einer Messvorrichtung (10) zur Bestimmung eines Füllstands eines Mediums (14) in dem Behälter (12) nach dem Radarprinzip angegeben, wobei die Messvorrichtung (10) einen Sender (18, 20) zum Abstrahlen eines Radarsignals (24) in Richtung des Behälters (12), einen Empfänger (22, 20) zum Erzeugen eines Empfangssignals aus dem vom Behälter (12) zurückkommenden Radarsignal (24) und eine Auswertungseinheit (26) zur Bestimmung des Füllstands aus dem Empfangssignal aufweist. Dabei ist die Messvorrichtung (10) außerhalb des Behälters (12) angeordnet, und der Behälter (12) weist in einem Durchtrittsbereich (28) des Radarsignals (24) eine nichtleitende Wandung auf.

## Beschreibung

Die Erfindung betrifft eine Anordnung mit einem Behälter und einer Messvorrichtung und ein Verfahren zur Bestimmung eines Füllstands eines Mediums in dem Behälter nach dem Radarprinzip gemäß Oberbegriff von Anspruch 1 beziehungsweise 11.

Füllstandsensoren nach dem Radarprinzip senden ein Radarsignal auf die Oberfläche des zu vermessenden Mediums und werten die Echos aus. Ein Nachteil der herkömmlichen Füllstandsensoren ist, dass sie direkt im Behälter oder an einer dafür vorgesehenen Öffnung angebracht werden müssen, damit das Radarsignal frei zum Medium und zurück propagieren kann.

Aus der DE 44 07 823 C2 ist ein Füllstandmessgerät bekannt, dessen Antenne von dem Innenraum des Behälters durch eine mikrowellendurchlässige Platte abgetrennt ist. Diese Platte ist Teil des Antennensystems und ändert nichts an der Art der Montage und Messung des Füllstandmessgeräts mit den zuvor genannten Nachteilen.

Die US 7 775 106 B2 offenbart eine Füllstandmessung, die zwar als radarbasiert bezeichnet ist, in Wirklichkeit aber auf eine in einer Sonde geführten Mikrowelle und keinem abgestrahlten Radarsignal basiert. Die Sonde ist seitlich an dem Behälter montiert, dessen Wand im Bereich der Sonde ein mikrowellendurchlässiges Fenster aufweist. Damit soll verhindert werden, dass die Sonde in das Medium hineinragt, damit auch Messungen mit Medien möglich sind, welche die Sonde beschädigen würden.

Die DE 20 2013 103 563 U1 beschreibt einen Füllstandsensor, der als Mikrowellenschranke mit Auswertung der Signalabschwächung ausgebildet ist. Sender und Empfänger der Mikrowellenschranke können auch außerhalb des Behälters angeordnet sein. Derartige Mikrowellenschranken arbeiten aber nicht nach dem Radarprinzip.

Es ist daher Aufgabe der Erfindung, die Handhabung einer Füllstandmessung nach dem Radarprinzip zu vereinfachen.

Diese Aufgabe wird durch eine Anordnung mit einem Behälter und einer Messvorrichtung und ein Verfahren zur Bestimmung eines Füllstands eines Mediums in dem Behälter nach dem Radarprinzip gemäß Anspruch 1 beziehungsweise 11 gelöst. Die Messvorrichtung arbeitet zunächst wie üblich mit einem Sender und einem Empfänger, die mittels einer Antenne ein Radarsignal in Richtung des Mediums abstrahlen, aus dem Echo des Radarsignals ein Empfangssignal erzeugen und an eine Auswertungseinheit weitergeben, die daraus den Füllstand bestimmt. Diese Auswertung bestimmt vorzugsweise die Signallaufzeit des Radarsignals, woraus sich der Abstand zwischen Messvorrichtung und Oberfläche des Mediums ergibt. Aus Behältergeometrie und Position der Messvorrichtung ist das leicht in einen Füllstand umrechenbar.

Die Erfindung geht nun von dem Grundgedanken aus, die Messvorrichtung nicht wie herkömmlich mit freiem Signalpfad zum Medium anzuordnen. Vielmehr wird die Messvorrichtung bezüglich des Behälters so angeordnet, dass sich eine Wandung des Behälters zwischen Messvorrichtung und Behälter befindet. Diese Wandung ist nichtleitend und wird deshalb von dem Radarsignal durchstrahlt. Eine leitfähige Wandung würde die Welle des Radarsignals abschirmen, und dann funktioniert die Messung nicht.

Die Erfindung hat den Vorteil, dass kein unmittelbares Einbringen oder Anbringen der Messvorrichtung im oder am Behälter erforderlich ist. Der Behälter muss nicht geöffnet oder irgendwie für die Zusammenarbeit mit der Messvorrichtung modifiziert werden. Deshalb ist ein Aufbau oder eine Veränderung der Anordnung besonders einfach. Der Vorteil zeigt sich besonders bei kleinen Behältern, die häufig ausgetauscht beziehungsweise von Hand geleert oder gefüllt werden, da hierfür keinerlei Montageschritte nötig sind. Der Behälter kann einfach weggenommen oder an die Messvorrichtung gestellt werden.

Der Behälter ist vorzugsweise geschlossen. Das bedeutet, dass an dem Behälter insgesamt keine Öffnung vorhanden ist, in der eine Messvorrichtung montiert werden oder durch die ein Radarsignal hindurchtreten könnte. Es schließt aber keine Anschlüsse etwa für Leitungen zum Befüllen oder Entnehmen des Mediums aus.

Der Behälter ist bevorzugt aus nichtleitendem Material hergestellt. Der Behälter ist also nicht nur im Durchtrittsbereich des Radarsignals, sondern insgesamt nichtleitend beziehungsweise nichtmetallisch, beispielsweise aus Kunststoff. Es ist dann nicht erforderlich, bei der Anordnung der Messvorrichtung Rücksicht auf den Durchtrittsbereich zu nehmen, der irgendwo am Behälter liegen kann.

Die Messvorrichtung ist bevorzugt ohne Kontakt mit dem Behälter montiert. Das erleichtert Montage und Austausch von Messvorrichtung oder Behälter weiter. Allerdings ist auch denkbar, den Behälter direkt an die Messvorrichtung heranzuführen, ohne dabei eine feste Verbindung herzustellen. Weiterhin vorstellbar ist eine gemeinsame Haltevorrichtung, in der Behälter und/oder Messvorrichtung lösbar montiert sind. Jedenfalls kann so der Behälter ganz einfach ausgetauscht werden, ohne die Messvorrichtung abzumontieren und umgekehrt, und auch eine Neukalibrierung ist deshalb nicht erforderlich.

Die Messvorrichtung ist bevorzugt von dem Behälter beabstandet. Die Anordnung ist also nicht nur kontaktlos, sondern es gibt einen deutlichen gegenseitigen Abstand von beispielsweise einem Meter oder noch mehr. Dadurch kann die Messvorrichtung die Abläufe an dem Behälter noch weniger stören.

Die Messvorrichtung ist bevorzugt über dem Behälter angeordnet. Das ist eine häufige Messposition für Füllstandsensoren, die auch erfindungsgemäß ohne freien Signalpfad möglich ist. Die nichtleitende Wandung ist in diesem Fall der Deckel des Behälters oder ein Teil davon.

Alternativ kann die Messvorrichtung seitlich zum Behälter angeordnet sein. Die nichtleitende Wandung ist in diesem Fall eine Seitenwand oder ein Teil davon. Eine bevorzugte Funktion in seitlicher Anordnung ist die Grenzstandswache für eine bestimmte Füllhöhe, beispielsweise vollen oder leeren Behälter. Herkömmlich ist eine seitliche Radarmessung ausgesprochen schwierig, wenn nicht unmöglich, weil eine seitliche Öffnung für das Radarsignal benötigt wird und dies natürlich nicht zum Auslaufen des Mediums aus dem Behälter führen darf.

Nochmals alternativ kann die Messvorrichtung unterhalb des Behälters angeordnet sein. Insbesondere wird dazu der Behälter einfach auf die Messvorrichtung gestellt, die ein entsprechendes Gehäuse aufweist, das beispielsweise gegen Spritzer und dergleichen geschützt ist und die Antenne entsprechend mit nichtmetallischem Material verkapselt. Damit wird der Platzbedarf für die Montage der Messvorrichtung wesentlich verringert. Außerdem ist die Handhabung besonders einfach, weil die Messvorrichtung so gestaltet werden kann, dass sie sich für den Benutzer nicht von einer einfachen Ablage unterscheidet.

In vorteilhafter Weiterbildung der Anordnung sind mehrere Behälter vorgesehen, und die Auswertungseinrichtung ist dafür ausgebildet, mehrere Füllstände in den mehreren Behältern zu bestimmen. Eine intelligente Mehrfachauswertung bedeutet hier den geringsten apparativen Aufwand. Alternativ ist die Richtung des Radarsignals veränderbar, sei es durch physische Bewegung der Antenne, eine gerichtete Antennenansteuerung oder auch die Verwendung mehrerer Antennen für unterschiedliche Richtungen.

Die Auswertungseinheit ist bevorzugt dafür ausgebildet, in einem Einlernschritt die Laufzeitunterschiede beim Durchtritt des Radarsignals durch die nichtleitende Wandung des Durchtrittsbereichs zu bestimmen und im Betrieb zu kompensieren. Damit wird verhindert, dass die von dem Radarsignal durchdrungene Wandung die Füllstandmessung verfälscht. Diese Kalibrierung kann durch eine Leermessung, aber auch eine Parametrierung beispielsweise auf Basis einer Rechnung in Kenntnis von Geometrie und Material des Behälters erfolgen.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Darstellung der Anordnung einer Messvorrichtung zur Bestimmung des Füllstands über einem Behälter;
- Fig. 2: eine schematische Darstellung einer alternativen seitlichen Anordnung der Messvorrichtung; und
- Fig. 3: eine schematische Darstellung einer weiteren alternativen Anordnung der Messvorrichtung unterhalb des Behälters.

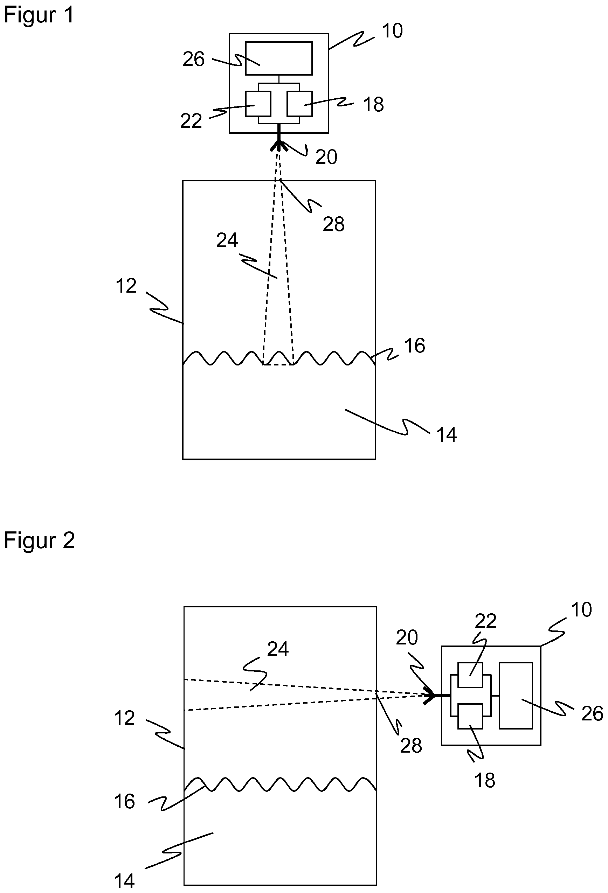

Figur 1 zeigt eine Anordnung einer Messvorrichtung zur Bestimmung des Füllstands beziehungsweise eines Füllstandsensors 10 nach dem Radarprinzip über einem Behälter 12 mit einem Medium 14. Aufgabe des Füllstandsensors 10 ist, die Lage der Oberfläche 16 des Mediums 14 und damit dessen Füllstand zu bestimmen.

Der Füllstandsensor 10 weist einen Sender 18, eine Antenne 20 und einen Empfänger 22 auf. Sender 18 und Empfänger 22 können auch gemeinsam als Transceiver ausgebildet sein. Damit wird ein Radarsignal 24 in Richtung der Oberfläche 16 ausgesandt und dessen Echo wieder empfangen. Das Radarsignal 24 ist vorzugsweise gerichtet, um nicht an der Oberfläche 16 erzeugte Echos zu unterdrücken. Der Empfänger 22 leitet das aus dem Radarsignal erzeugte Empfangssignal an eine Auswertungseinheit 26 weiter. Dort wird die Signallaufzeit zwischen Aussenden und Empfangen in an sich bekannter Weise bestimmt. Auf diese Weise wird der Abstand der Oberfläche 16 vermessen, aus dem mit Hilfe der Position des Füllstandsensors 10 gegenüber dem Behälter 12 die Füllhöhe und bei bekannter Geometrie des Behälters 12 auch die Füllmenge bestimmt werden kann.

Der Behälter 12 ist zumindest im Durchtrittsbereich 28 des Radarsignals 24 geschlossen. Dort befindet sich also keine Öffnung, sondern eine Wandung des Behälters 28, in diesem Fall der Deckel. Der Durchtrittsbereich 28 ist aus einem nichtleitenden Material hergestellt. Für die Messung genügt eine Art Fenster aus nichtleitendem Material, es kann aber auch der ganze Deckel oder sogar der gesamte Behälter 12 aus nichtleitendem Material bestehen. Ein typisches Beispiel für einen solchen Behälter ist ein Kanister oder eine Flasche aus Kunststoff.

Die Messung des Füllstandsensors 10 erfolgt somit durch die Behälterwand hindurch. Dies ist möglich, weil die mit dem Radarsignal 24 abgestrahlte Energie einer Hochfrequenzwelle durch nicht leitfähige Materialien hindurch propagiert. So kann die abgestrahlte Welle durch den Durchtrittsbereich 28 bis zur Oberfläche 16 gelangen. Dort wird die Welle reflektiert und propagiert wieder durch den Durchtrittsbereich bis zur Antenne 20. Aufgrund der Messung in den geschlossenen Behälter 12 hinein kann der Füllstandsensor 10 kontaktlos und sogar in einem größeren Abstand zum Behälter 12 montiert werden.

Je nach Dicke des Durchtrittsbereichs 28 und geforderter Messgenauigkeit kann es sinnvoll sein, die Geschwindigkeitsänderung des Radarsignals 24 während der Durchdringung der Behälterwand zu berücksichtigen. Beispielsweise wird der dadurch verursachte Laufzeitfehler in einer Kalibrationsmessung eingelernt oder parametriert und dann im Betrieb in der Auswertungseinheit 28 korrigiert.

Eine bevorzugte Anwendung betrifft eher kleinere Behälter 12, beispielsweise einen 10-Liter-Kanister, in den beispielsweise ein flüssiges Abfallprodukt aus einem Prozess eingeleitet wird. Wenn der Kanister vollläuft, kann er einfach ausgeschüttet und zurückgestellt oder durch einen leeren Kanister ersetzt werden. Schritte wie das Abmontieren oder Entnehmen des Füllstandsensors 10, dessen Reinigung und erneute Montage entfallen. Ebenso einfach ist auch der Austausch des Füllstandsensors 10.

Figur 2 zeigt eine alternative Anordnung des Füllstandsensors 10 seitlich des Behälters 12. Dabei bezeichnen die gleichen Bezugszeichen gleiche Merkmale und werden nicht erneut beschrieben. Der seitlich angeordnete Füllstandsensor 10 kann insbesondere als Wächter für eine bestimmte Füllhöhe genutzt werden. Eine Modifikation des Behälters 12, also das Anbringen einer Öffnung oder dergleichen, ist dabei nicht erforderlich, weil das Radarsignal den Durchtrittsbereich 28 des Behälters 12 durchdringt.

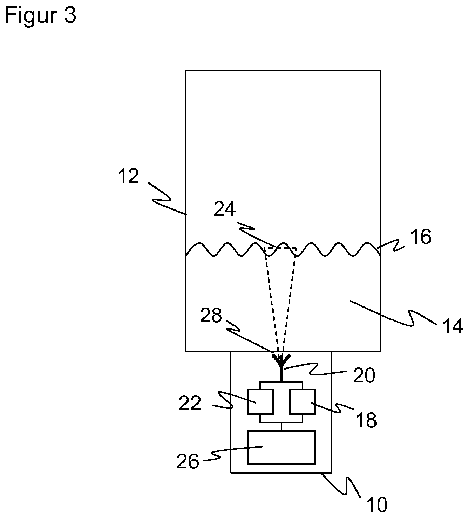

Figur 3 zeigt eine weitere alternative Anordnung, in welcher der Füllstandsensors 10 unterhalb des Behälters 12 angeordnet ist. Anders ausgedrückt wird der Behälter 12 auf den Füllstandsensor 10 gestellt. Deshalb ist in dieser Ausführungsform die Antenne 20 vollständig innerhalb des Füllstandsensors 10 dargestellt, wobei dies für die anderen Ausführungsformen nach Figur 1 oder 2 auch denkbar ist. Weiterhin ist eine nicht gezeigte dazwischen angeordnete Ablage denkbar, die aber nichtleitend und bevorzugt auch wenig dämpfend ausgestaltet sein sollte.

Diese Anordnung des Füllstandsensors 10 von unten eignet sich besonders für Medien 14 mit geringer Permittivität wie Öl und praktisch alle Flüssigkeiten mit geringem Wasseranteil. Die Radarmessung erzeugt zunächst ein Echo am Boden des Behälters 12 im Bereich der Wandung 28, wobei dieses Echo aber maßgeblich durch den Eintritt in das Medium 14 und nicht durch die Wandung 28 verursacht ist. Ein weiteres Echo, das den eigentlichen Messwert liefert, entsteht dann an der Oberfläche 16 im Übergang von Medium 14 zur darüber liegenden Luftschicht. Eine geringe Permittivität des Mediums 14 ist deshalb nützlich, weil dann nach dem unteren Echo noch genug Energie übrig bleibt, um ein möglichst starkes, gut auswertbares Echo an der Oberfläche 16 zu erzeugen.

## Patentansprüche

1. Anordnung mit einem Behälter (12) und einer Messvorrichtung (10) zur Bestimmung eines Füllstands eines Mediums (14) in dem Behälter (12) nach dem Radarprinzip, wobei die Messvorrichtung (10) einen Sender (18, 20) zum Abstrahlen eines Radarsignals (24) in Richtung des Behälters (12), einen Empfänger (22, 20) zum Erzeugen eines Empfangssignals aus dem vom Behälter (12) zurückkommenden Radarsignal (24) und eine Auswertungseinheit (26) zur Bestimmung des Füllstands aus dem Empfangssignal aufweist,
**dadurch gekennzeichnet,**
**dass** die Messvorrichtung (10) außerhalb des Behälters (12) angeordnet ist und der Behälter (12) in einem Durchtrittsbereich (28) des Radarsignals (24) eine nichtleitende Wandung aufweist.

2. Anordnung nach Anspruch 1,
wobei der Behälter (12) geschlossen ist.

3. Anordnung nach Anspruch 1 oder 2,
wobei der Behälter (12) aus nichtleitendem Material hergestellt ist.

4. Anordnung nach einem der vorhergehenden Ansprüche ,
wobei die Messvorrichtung (10) ohne Kontakt mit dem Behälter (12) montiert ist.

5. Anordnung nach einem der vorhergehenden Ansprüche,
wobei die Messvorrichtung (10) von dem Behälter (12) beabstandet ist.

6. Anordnung nach einem der vorhergehenden Ansprüche,
wobei die Messvorrichtung (10) über dem Behälter (12) angeordnet ist.

7. Anordnung nach einem der Ansprüche 1 bis 5,
wobei die Messvorrichtung (10) seitlich zum Behälter (12) angeordnet ist.

8. Anordnung nach einem der Ansprüche 1 bis 5,
wobei die Messvorrichtung (10) unterhalb des Behälters (12) angeordnet ist.

9. Anordnung nach einem der vorhergehenden Ansprüche,
wobei mehrere Behälter vorgesehen sind und die Auswertungseinrichtung (26) dafür ausgebildet ist, mehrere Füllstände in den mehreren Behältern zu bestimmen.

10. Anordnung nach einem der vorhergehenden Ansprüche,
wobei die Auswertungseinheit (26) dafür ausgebildet ist, in einem Einlernschritt die Laufzeitunterschiede beim Durchtritt des Radarsignals (24) durch die nichtleitende Wandung des Durchtrittsbereichs (28) zu bestimmen und im Betrieb zu kompensieren.

11. Verfahren zur Bestimmung eines Füllstands eines Mediums (14) in einem Behälter (12) nach dem Radarprinzip, bei dem ein Radarsignal (24) in Richtung des Behälters (12) gestrahlt, aus dem vom Behälter (12) zurückkommenden Radarsignal (24) ein Empfangssignal erzeugt und das Empfangssignal zur Bestimmung des Füllstands ausgewertet wird,
**dadurch gekennzeichnet,**
**dass** das Radarsignal (24) außerhalb des Behälters (12) erzeugt und empfangen wird und bei der Messung durch eine nichtleitende Wandung (28) des Behälters (12) hindurchtritt.
